(19) Europäisches Patentamt
European Patent Office
Office européen des brevets

(11) **EP 4 397 195 A1**

(12) **EUROPEAN PATENT APPLICATION**
published in accordance with Art. 153(4) EPC

(43) Date of publication:
**10.07.2024 Bulletin 2024/28**

(21) Application number: **22863007.5**

(22) Date of filing: **03.08.2022**

(51) International Patent Classification (IPC):
***A24F 40/00*** *(2020.01)*

(52) Cooperative Patent Classification (CPC):
**Y02E 60/10**

(86) International application number:
**PCT/CN2022/110076**

(87) International publication number:
**WO 2023/029866 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111012970**

(71) Applicant: **Shenzhen Merit Technology Co., Ltd.**
**Shenzhen, Guangdong 518105 (CN)**

(72) Inventor: **ZHANG, Xingfu**
**Shenzhen, Guangdong 518105 (CN)**

(74) Representative: **Herrero & Asociados, S.L.**
**Edificio Aqua.**
**Calle Agustín de Foxá 4-10**
**28036 Madrid (ES)**

(54) **HEATING ASSEMBLY, ELECTRONIC ATOMIZATION DEVICE AND CONTROL METHOD FOR HEATING ASSEMBLY**

(57)     The present disclosure provides a heating assembly, an electronic atomization device, and a method for controlling a heating assembly. The heating assembly includes a heating element and a controlling unit. The controlling unit detects a current resistance value of the heating element at a current time point, and determines a target resistance value corresponding to a target temperature at the current time point. When the target resistance value is greater than the current resistance value, according to whether a difference between the target resistance value and the current resistance value is not less than a preset threshold, the controlling unit conducts a path between a battery assembly and the heating element within a first time period or a second time period. By controlling the heating time, the temperature of the heating element is kept to be close to the target temperature to ensure the atomization effect.

FIG. 1

## Description

## CROSS REFERENCE TO RELATED APPLICATIONS

The present disclosure claims the priority benefit of Chinese patent application No. 202111012970.X, entitled filed on August 31, 2021, the contents of which are incorporated herein by reference.

## TECHNICAL FIELD

The present disclosure relates to the field of electronic atomization devices, and in particular to a heating assembly, an electronic atomization device, and a method for controlling a heating assembly.

## BACKGROUND

An electronic atomization device is configured to atomize substrates, the electronic atomization device can be used in various fields. For example, the electronic atomization device can be used to bake a solid substrate of plant leaves with specific aroma in a non-combustion way resulting in the solid substrate of the leaves is baked to form aerosol. Moreover, fragrance and flavoring ingredients can be added to the plant leaves and mixed with the aerosol during the baking, in this way the aerosol has the desired aroma.

The electronic atomization device in the art typically includes a battery assembly and a heating assembly. The heating assembly can receive or insert into the substrate and includes a heating element, and the battery assembly supplies power to the heating element to heat the substrate and form aerosol.

However, during atomization process of the electronic atomization device in the art, when the temperature of the heating element is too high, the aerosol may have a burnt taste; when the temperature of the heating element is too low, the substrate may not be fully heated and atomized, resulting in poor atomization effect.

## SUMMARY OF THE DISCLOSURE

The present disclosure provides a heating assembly, an electronic atomization device, and a method for controlling the heating assembly, the heating assembly effectively controls the temperature of a heating element to ensure the atomization effect.

In a first aspect, the present disclosure provides a heating assembly, the heating assembly includes a heating element and a controlling unit. The controlling unit is configured to detect a current resistance value of the heating element at a current time point during a heating phase, and to determine a target resistance value corresponding to a target temperature at the current time point. In response to the target resistance value being greater than the current resistance value, and a difference between the target resistance value and the current resistance value being not less than a preset threshold, the controlling unit is configured to conduct a path between a battery assembly connected to the heating assembly and the heating element within a first time period to drive the heating element to work and generate heat during the first time period. In response to the target resistance value being greater than the current resistance value, and the difference between the target resistance value and the current resistance value being less than the preset threshold, the controlling unit is configured to conduct the path between the battery assembly and the heating element within a second time period to drive the heating element to work and generate heat during the second time period. The first time period is longer than the second time period.

In some embodiments, in response to the target resistance value being not greater than the current resistance value, the controlling unit is configured to conduct the path between the battery assembly and the heating element within a third time period to drive the heating element to work and generate heat during the third time period. The third time period is shorter than the second time period.

In some embodiments, a cut-off time period is defined between two adjacent second time periods, between two adjacent first time periods, between two adjacent third time periods, between the second time period and the first time period adjacent the second time period, between the second time period and the third time period adjacent the second time period, or between the first time period and the third time period adjacent the first time period. The cut-off time period has a fixed time length.

In some embodiments, the heating assembly further includes a switching unit. The switching unit is located on the path between the heating element and the battery assembly. The controlling unit is connected to the switching unit to control conduction of the switching unit, so as to conduct the path between the battery assembly and the heating element within the second time period, the first time period, or the third time period.

In some embodiments, the heating element includes a heating unit and a temperature measuring unit. The heating unit is connected to the battery assembly through the switching unit. The temperature measuring unit is in-parallel connected to the heating unit and is connected to the controlling unit, enabling the controlling unit to detect the current resistance value of the heating element through the temperature measuring unit. The heating assembly includes a sampling unit connected in series with the temperature measuring unit. The sampling unit is connected to the controlling unit, enabling the controlling unit to detect a current flowing through the sampling unit and the temperature measuring unit through the sampling unit, and a resistance value of the temperature measuring unit is determined. The resistance value of the temperature measuring unit represents the current resistance value of the heating element.

In some embodiments, the second time period, the first time period, and the third time period are adjustable.

In some embodiments, the controlling unit includes a proportional-integral-differential controller (PID controller) to adjust the second time period, the first time period, or the third time period, according to the fixed time length cut-off time period, the current resistance value, and the target resistance value.

In some embodiments, a first ratio of the second time period to a first time sum is adjustable, the first ratio is greater than 0 and less than or equal to 99.9%, and the first time sum is a sum of the second time period and the cut-off time period. And/or, a second ratio of the first time period to a second time sum is adjustable, the second ratio is greater than 0 and less than or equal to 99.9%, and the second time sum is a sum of the first time period and the cut-off time period. And/or, a third ratio of the third time period to a third time sum is adjustable, the third ratio is greater than 0 and less than or equal to 99.9%, and the third time sum is a sum of the third time period and the cut-off time period.

In some embodiments, the controlling unit is configured to detect the current resistance value of the heating element at the current time point within the cut-off time period.

In some embodiments, the target temperature of the heating element at the current time point is determined according to a preset temperature-time curve of the heating element within the heating phase. The target resistance value corresponding to the target temperature is determined according to a preset temperature-resistance relationship table.

In a second aspect, the present disclosure provides a method for controlling a heating assembly, and the method includes: a current resistance value of a heating element at a current time point during a heating phase is detected, and a target resistance value corresponding to a target temperature at the current time point is determined; in response to the target resistance value being greater than the current resistance value, and a difference between the target resistance value and the current resistance value being not less than a preset threshold, a path between a battery assembly connected to the heating assembly and the heating element is conducted, within a first time period to drive the heating element to work and generate heat during the first time period; in response to the target resistance value being greater than the current resistance value, and the difference between the target resistance value and the current resistance value being less than the preset threshold, the path between the battery assembly and the heating element is conducted within a second time period to drive the heating element to work and generate heat during the second time period; wherein the first time period is longer than the second time period.

In some embodiments, in response to the target resistance value being not greater than the current resistance value, the path between the battery assembly and the heating element is conducted within a third time period to drive the heating element to work and generate heat during the third time period. The third time period is shorter than the second time period.

In a third aspect, the present disclosure provides an electronic atomization device, the electronic atomization device includes the heating assembly according to any one of embodiments mentioned above and a battery assembly. The battery assembly is configured to supply power to the heating assembly.

In the present disclosure, the heating assembly includes the heating element and the controlling unit. The controlling unit is configured to detect the current resistance value of the heating element at the current time point during the heating phase, and to determine the target resistance value corresponding to the target temperature at the current time point. When the target resistance value is greater than the current resistance value, and the difference between the target resistance value and the current resistance value is not less than the preset threshold, the controlling unit conducts a path between the battery assembly connected to the heating assembly and the heating element within the first time period, driving the heating element to work and generate heat during the first time period. When the target resistance value is greater than the current resistance value, and the difference between the target resistance value and the current resistance value is less than the preset threshold, the controlling unit conducts the path between the battery assembly and the heating element within the second time period, driving the heating element to work and generate heat during the second time period. Wherein, the first time period is longer than the second time period. By controlling the heating time, the temperature of the heating element is kept to be close to the target temperature to ensure the atomization effect.

**BRIEF DESCRIPTION OF THE DRAWINGS**

In order to more clearly illustrate technical solutions in the embodiments of the present disclosure, drawings required for the description of the embodiments will be briefly introduced below. Obviously, the drawings in the following description are only some embodiments of the present disclosure. For those skilled in the art, other drawings can be obtained according to these drawings without any creative work.

FIG. 1 is a structural schematic view of a heating assembly according to an embodiment of the present disclosure.
FIG. 2 is a time-sequence chart of a switching unit according to an embodiment of the present disclosure.
FIG. 3 is a circuit diagram of the heating assembly according to an embodiment of the present disclosure.
FIG. 4 is a flow chart of a controlling method of a controlling unit according to an embodiment of the present disclosure.

FIG. 5 is a flow chart of a method for controlling the heating assembly according to an embodiment of the present disclosure.

FIG. 6 is a flow chart of the method for controlling the heating assembly according to another embodiment of the present disclosure.

FIG. 7 is a structural schematic view of an electronic atomization device according to an embodiment of the present disclosure.

## DETAILED DESCRIPTION

The technical solutions in the embodiments of the present disclosure will be clearly and completely described below in combination with the drawings of the embodiments of the present disclosure. Obviously, the embodiments described are only part of the embodiments of the present disclosure, but not all of the embodiments. Based on the embodiments in the present disclosure, all other embodiments obtained by those skilled in the art without creative work fall within a protection scope of the present disclosure.

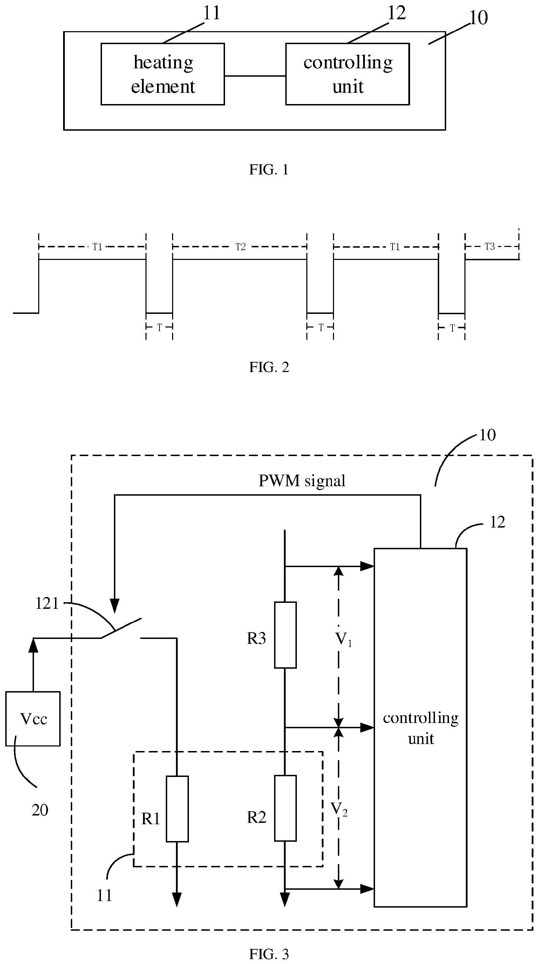

As shown in FIG. 1, FIG. 1 is a structural schematic view of a heating assembly according to an embodiment of the present disclosure. The heating assembly 10 includes a heating element 11 and a controlling unit 12. The controlling unit 12 controls the heating element 11 to heat a substrate to form aerosol.

In detail, the controlling unit 12 is configured to detect a current resistance value Rx of the heating element 11 at a current time point during a heating phase, and to determine a target resistance value Rt corresponding to a target temperature at the current time point. A time length of the heating element 11 generating heat is controlled based on a relationship between the current resistance value Rx and the target resistance value Rt. In practical applications, the higher a resistance value, the higher a corresponding temperature. Therefore, when the target resistance value Rt is greater than the current resistance value Rx, it can be determined that a temperature corresponding to the target resistance value Rt is greater than a temperature corresponding to the current resistance value Rx.

In an embodiment, as shown in FIG. 2, when the target resistance value Rt is greater than the current resistance value Rx, and a difference between the target resistance value Rt and the current resistance value Rx is not less than a preset threshold, the controlling unit 12 conducts a path between a battery assembly 20 connected to the heating assembly 10 and the heating element 11 within a first time period T2, driving the heating element 11 to work and generate heat during the first time period T2. When the target resistance value Rt is greater than the current resistance value Rx, and the difference between the target resistance value Rt and the current resistance value Rx is less than the preset threshold, the controlling unit 12 conducts the path between the battery assembly 20 and the heating element 11 within a second time period T1, driving the heating element 11 to work and generate heat during the second time period T1. Wherein, the first time period T2 is longer than the second time period T1.

In detail, the temperature corresponding to the current resistance value Rx is a current temperature of the heating element 11, the temperature corresponding to the target resistance value Rt is a current target temperature of the heating element 11. That is, when the target temperature is greater than the current temperature, and a temperature difference between the target temperature and the current temperature is significantly great, the current temperature of the heating element 11 is needed to be increased. In this case, the heating element 11 works for a relatively long time to generate heat, such as the first time period T2. When the target temperature is greater than the current temperature, and the temperature difference between the target temperature and the current temperature is relatively less, the heating element 11 works for a relatively short time to generate heat, such as the second time period T1.

In detail, a temperature-resistance relationship table and a temperature-time curve are stored in advance. When the current resistance value Rx corresponding to the current time point is detected, the current temperature corresponding to the current resistance value Rx is determined based on the temperature-resistance relationship table. Further, the target temperature corresponding to the current time point can be obtained based on the temperature-time curve according to the time of the current time point. Further, the target resistance value Rt corresponding to the target temperature can be determined from the temperature-resistance relationship table based on the target temperature.

When the controlling unit 12 detects that the target resistance value Rt of the heating element 11 at the current time point is greater than the current resistance value Rx at the current time point, and the difference between the target resistance value Rt and the current resistance value Rx is greater than or equal to the preset threshold, at this time, the temperature of the heating element 11 is relatively low, and the heating element 11 can not heat the substrate sufficiently. At this time, the heating element 11 needs to work and generate heat for a relatively long time to ensure the heating effect of the heating element 11. When the difference between the target resistance value Rt of the heating element 11 and the current resistance value Rx is less than the preset threshold, at this time, a part of the substrate may not be fully heated by the heating element 11. Therefore, the heating element 11 needs to work and generate heat for a relatively short time to ensure the heating element 11 to be at a relatively high temperature to fully heat the substrate. In this way, the continuous heating effect of the heating element 10 is ensured. By controlling the temperature of the heating element 11, insufficient atomization and poor atomization effect caused by too low temperature can be avoided.

In an embodiment, the controlling unit 12 is further configured to conduct, when the target resistance value Rt is not greater than the current resistance value Rx, the path between the battery assembly 20 and the heating element 11 within a third time period T3 to drive the heating element 11 to work and generate heat during the third time period T3. Wherein, the third time period T3 is shorter than the second time period T1.When the current resistance value Rx of the heating element 11 at the current time point is greater than the target resistance value Rt, the heating element 11 can fully heat the substrate to form aerosol. In this case, the heating element 11 needs only to work for a very short time to generate heat. Therefore, a heating time of the third time period T3 is shorter than the second time period T1.

In order to prevent the heating element 11 from working for a long time to generate heat, causing the temperature of the heating element 11 to be too high, and prevent excessive temperature of the heating element 11 from damaging the heating element 11 and other components. In an embodiment, a cut-off time period T is defined between two adjacent second time periods T1, between two adjacent first time periods T2, between two adjacent third time periods T3, between the second time period T1 and the first time period T2 adjacent to the second time period T1, between the second time period T1 and the third time period T3 adjacent to the second time period T1, or between the first time period T2 and the third time period T3 adjacent to the first time period T2. During the cut-off time period T, the controlling unit 12 controls the path between the battery assembly 20 and the heating element 11 to be disconnected, the battery assembly 20 dose not supply power to the heating element 11, and the heating element 11 continuously heats the substrate by the temperature raised in a previous heating cycle. Understandably, the cut-off time period T has a fixed time length. That is, all the cut-off time periods T has a same amount of a change in the resistance value of the heating element 11, and a same amount of a change in the temperature of the heating element 11. In addition, during the cut-off time period T, the actual temperature of the heating element 11 is lower than the target temperature. Therefore, the controlling unit 12 controls the time length of the heating element 11 generating heat in a next heating cycle, according to a falling temperature of the heating element 11 during the cut-off time period T and the actual temperature of the heating element 11 detected in the previous heating cycle, enabling the actual temperature of the heating element 11 in the next heating cycle can make the substrate to be heated sufficiently.

By defining the fixed time length cut-off time period T between two adjacent heating cycles, on the one hand, overheating of the heating element 11 can be prevented, causing the excessive temperature of the heating element 11 to damage the heating element 11 and the other components, and on the other hand, an energy conversion rate can be improved and a battery life of the electronic atomization device can be increased.

In an embodiment, as shown in FIG. 3, FIG. 3 is a circuit diagram of the heating assembly according to an embodiment of the present disclosure. The heating assembly 10 further includes a switching unit 121, the switching unit 121 is located on the path between the heating element 11 and the battery assembly 20. Wherein, the controlling unit 12 is connected to the switching unit 121 to control a conduction of the switching unit 121, so as to conduct the path between the battery assembly 20 and the heating element 11 within the second time period T1, the first time period T2, or the third time period T3, enabling the heating element 11 to heat the substrate to form aerosol.

In an embodiment, the heating element 11 includes a heating unit R1 and a temperature measuring unit R2. Wherein, the heating unit R1 is connected to the battery assembly 20 through the switching unit 121. When the switching unit 121 is in a conduction state, the battery assembly 20 supplies power to the heating unit R1, in this way the heating unit R1 is heated to heat the substrate to form aerosol. The temperature measuring unit R2 is in-parallel to the heating unit R1 and is connected to the controlling unit 12, enabling the controlling unit 12 to detect the current resistance value Rx of the heating unit R1 through the temperature measuring unit R2. In an embodiment, the switching unit 121 is a metal-oxide-semiconductor field-effect transistor (MOS transistor).

The heating assembly 10 further includes a sampling unit R3, the sampling unit R3 is connected in series with the temperature measuring unit R2, and the sampling unit R3 is connected to the controlling unit 12. The controlling unit 12 detects, through the sampling unit R3, a current flowing through the sampling unit R3 and the temperature measuring unit R2 to determine a resistance value of the temperature measuring unit R2. Wherein, the resistance value of the temperature measuring unit R2 represents the current resistance value Rx of the heating element 11. A current actual resistance value of the temperature measuring unit R2 is a current actual resistance value of the heating element 11. In detail, the controlling unit 12 can detect the current Is flowing through the sampling unit R3, the resistance value of the sampling unit R3 is known, and a voltage V1 of the sampling unit R3 can be calculated. According to the voltage division principle of a series circuit, a voltage V2 of the temperature measuring unit R2 is a voltage of the battery assembly 20 minus the voltage V1 of the sampling unit R3, and then the resistance value of the temperature measuring unit R2 at the current time point is obtained through a resistance calculation formula as follow:

$$R2 = \frac{V2}{Is} = \frac{V2}{\frac{V1}{R3}} = \frac{V2 * R3}{V1}$$
.

In addition, the resistance value of the temperature measuring unit R2 represents the current resistance value Rx of the heating element 11, in this way, the current resistance value Rx of the heating element 11 at the current time point is obtained. The controlling unit 12 compares the current resistance value Rx of the temperature measuring element at the current time point, the target resistance value Rt corresponding to the target temperature at the current time point, and the preset threshold, to determine whether to drives the battery assembly 20 to supply power to the heating element 11 for the second time period T1, the first time period T2, or the third time period T3.

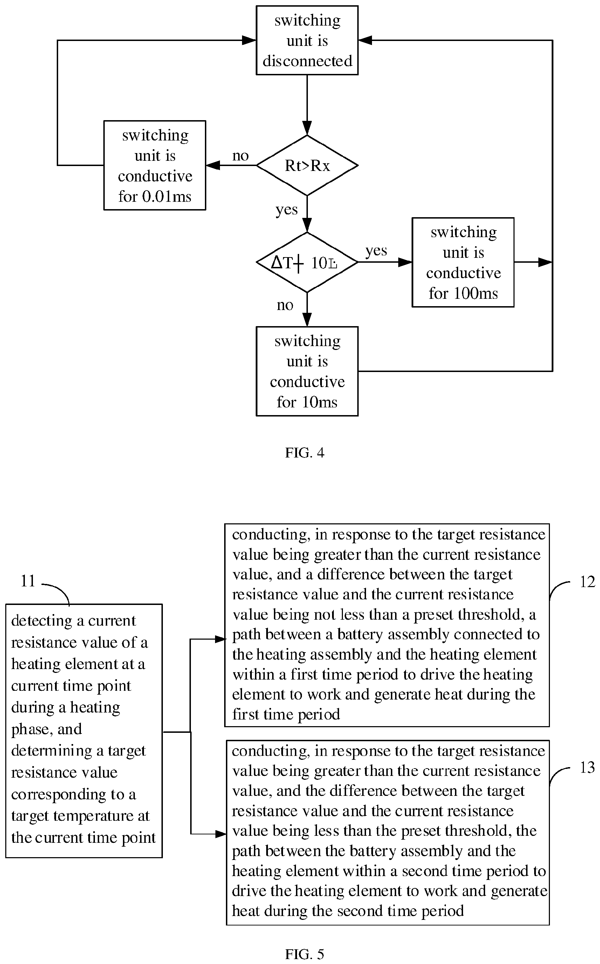

In an embodiment, the second time period T1, the first time period T2, and the third time period T3 are adjustable. As shown in FIG. 4, FIG. 4 is a flow chart of a controlling method of a controlling unit according to an embodiment of the present disclosure. When the switching unit 121 is disconnected, the controlling unit 12 samples the current resistance value Rx of the heating element 11 at the current time point, and compares the current resistance value Rx with the target resistance value Rt corresponding to the target temperature at the current time point. When the target resistance value Rt is greater than the current resistance value Rx, whether the difference between the target resistance value Rt and the current resistance value Rx is greater than or equal to the preset threshold is compared. When the difference between the target resistance value Rt and the current resistance value Rx is greater than or equal to the preset threshold, in the next heating cycle, the switching unit 121 is conductive, the battery assembly 20 supplies power to the heating element 11 continuously for 100 ms (millisecond). When the difference between the target resistance value Rt and the current resistance value Rx is less than the preset threshold, in the next heating cycle, the switching unit 121 is conductive, the battery assembly 20 supplies power to the heating element 11 continuously for 10 ms. When the target resistance value Rt is not greater than the current resistance value Rx, in the next heating cycle, the switching unit 121 is conductive, the battery assembly 20 supplies power to the heating element 11 continuously for 0.01 ms. In this embodiment, values of 0.01 ms, 10 ms, and 100 ms are for illustrative purposes only, and the actual values are selected according to the specific situation.

In an embodiment, the controlling unit 12 includes a proportional-integral-differential controller (PID controller) to adjust the second time period T1, the first time period T2, or the third time period T3, according to the fixed time length cut-off time period T, the current resistance value Rx, and the target resistance value Rt.

In detail, the second time period T1, the first time period T2, and the third time period T3 are adjusted according to a duty cycle. For example, the fixed time length cut-off time period T is Toff, one heating cycle such as the second time period T1, the first time period T2, or a third time is Ton, and one fixed time length cut-off time period Toff and one heating cycle Ton are one time sum. According to a duty cycle formula, it can be known that an adjustable duty cycle of one heating cycle Ton ranges from 0 to 99.9%. The duty cycle formula is as follow:

$$99.9\% \ge \frac{Ton}{Ton + Toff} > 0$$
.

That is, a first ratio of the second time period T1 to a first time sum is adjustable, wherein the first ratio is greater than 0 and less than or equal to 99.9%. And/or, a second ratio of the first time period T2 to a second time sum is adjustable, wherein the second ratio is greater than 0 and less than or equal to 99.9%. And/or, a third ratio of the third time period T3 to a third time sum is adjustable, wherein the third ratio is greater than 0 and less than or equal to 99.9%.

In an embodiment, the controlling unit 12 detects the current resistance value Rx of the heating element 11 at the current time point within the cut-off time period T.

In an embodiment, the heating assembly 10 is preset with the temperature-time curve and the temperature-resistance relationship table. According to the preset temperature-time curve of the heating element 11 within the heating phase, the target temperature of the heating element 11 at the current time point is determined. According to the preset temperature-resistance relationship table, the target resistance value Rt corresponding to the target temperature is determined. When the target resistance value Rt is greater than the current resistance value Rx, and the difference between the target resistance value Rt and the current resistance value Rx is not less than the preset threshold, the controlling unit 12 conducts the path between the battery assembly 20 connected to the heating assembly 10 and the heating element 11 within the first time period T2, driving the heating element 11 to work and generate heat during the first time period T2. When the target resistance value Rt is greater than the current resistance value Rx, and the difference between the target resistance value Rt and the current resistance value Rx is less than the preset threshold, the controlling unit 12 conducts the path between the battery assembly 20 and the heating element 11 within the second time period T1, driving the heating element 11 to work and generate heat during the second time period T1.

This present disclosure provides the heating assembly 10, detecting the current resistance value Rx of the heating element 11 at the current time point during the heating phase through the controlling unit 12, comparing with the target resistance value Rt pre-stored corresponding to the target temperature at the current time point and the preset threshold. The conduction of the switching unit 121 is controlled through a PWM signal, in this way, the heating time for the battery assembly 20 to supply power to the heating element 11 is adjusted, the actual temperature of the heating element 11 is controlled to be close to the preset target temperature ensuring the atomization effect of the heating assembly 10.

The PWM signal is a pulse width modulation signal. This present disclosure drives the conduction and shutdown of the switching unit by utilizing the PWM signal, adjusts the duty cycle of the PWM signal, so as to adjust a conduction time and a shutdown time of the switching unit.

As shown in FIG. 5, FIG. 5 is a flow chart of a method for controlling the heating assembly according to an embodiment of the present disclosure. The method can begin at block 11.

At block 11, a current resistance value of a heating element at a current time point during a heating phase is detected, and a target resistance value corresponding to a target temperature at the current time point is determined.

In detail, the current resistance value of the heating element at the current time point during the heating phase is detected, and the target resistance value corresponding to the target temperature at the current time point is determined. A time length of the heating element generating heat is controlled based on a relationship between the current resistance value and the target resistance value. In practical applications, the higher a resistance value, the higher a corresponding temperature. Therefore, when the target resistance value is greater than the current resistance value, it can be determined that a temperature corresponding to the target resistance value is greater than a temperature corresponding to the current resistance value.

At block 12, in response to the target resistance value being greater than the current resistance value, and a difference between the target resistance value and the current resistance value being not less than a preset threshold, a path between the battery assembly connected to the heating assembly and the heating element is conducted within a first time period, driving the heating element to work and generate heat during the first time period.

When the target resistance value of the heating element at the current time point is greater than the current resistance value at the current time point is detected, and the difference between the target resistance value and the current resistance value is greater than or equal to the preset threshold, at this time, the temperature of the heating element is relatively low, and the heating element can not fully heat the substrate. At this time, the heating element needs to work and generate heat for a relatively long time to ensure the heating effect of the heating element. Therefore, the heating element is driven during the first time period.

At block 13, in response to the target resistance value being greater than the current resistance value, and the difference between the target resistance value and the current resistance value being less than the preset threshold, the path between the battery assembly and the heating element is conducted within a second time period, driving the heating element to work and generate heat during the second time period.

When the target resistance value of the heating element at the current time point is greater than the current resistance value at the current time point is detected, and the difference between the target resistance value and the current resistance value is less than the preset threshold, at this time, a part of the to-be-atomized substrate may not be fully heated by the heating element. Therefore, the heating element needs to work and generate heat for a relatively short time to ensure the heating element to be at a relatively high temperature to fully heat the substrate, and ensure the continuously heating effect of the heating assembly. Therefore, the heating element is driven during the second time period.

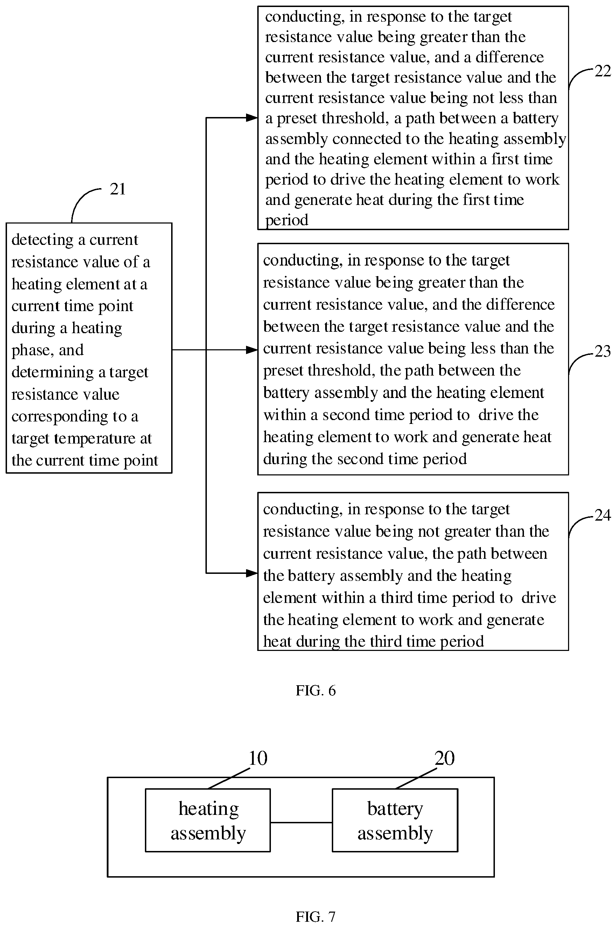

As shown in FIG. 6, in another embodiment, in response to the target resistance value being not greater than the current resistance value, the path between the battery assembly and the heating element is conducted within a third time period, driving the heating element to work and generate heat during the third time period. The third time period is shorter than the second time period. That is, when the current resistance value of the heating element at the current time point is greater than the target resistance value, the heating element can fully heat the substrate to form aerosol. In this case, the heating element only needs to work for a very short time to generate heat. Therefore, a heating time of the third time period is less than the second time period and the first time period.

This present disclosure provides the method for controlling the heating assembly, detecting the actual resistance value of the heating element at the current time point during the heating phase, comparing with the target resistance value pre-stored corresponding to the target temperature at the current time point, and comparing a difference between the target temperature and the actual temperature with the preset threshold temperature. By controlling the conduction of the switching unit through the PWM signal, the time length of the heating element generating heat is adjusted, and the actual temperature of the heating element is controlled to be close to the preset target temperature to ensure the atomization effect of the heating assembly.

As shown in FIG. 7. FIG. 7 is a structural schematic view of an electronic atomization device according to an embodiment of the present disclosure. The electronic atomization device includes the heating assembly 10 and the battery assembly 20. Wherein, the heating assembly 10 can be inserted into a solid substrate or be surrounded outside the substrate. The battery assembly 20 is electrically connected to the heating assembly 10 to supply power to the heating assembly 10, enabling the heating assembly 10 to heat the substrate to form aerosol.

The above description is only embodiments of the present disclosure and is not intended to limit the scope of the present disclosure. Any equivalent structural transformations or equivalent process transformations made by using the description and the drawings of the present disclosure, or directly or indirectly applied to other related technical fields, is included within the scope of the present disclosure.

## Claims

1. A heating assembly, comprising:

   a heating element; and
   a controlling unit, configured to detect a current resistance value of the heating element at a current time point during a heating phase, and to determine a target resistance value corresponding to a target temperature at the current time point;
   wherein, in response to the target resistance value being greater than the current resistance value, and a difference between the target resistance value and the current resistance value being not less than a preset threshold, the controlling unit is configured to conduct a path between a battery assembly connected to the heating assembly and the heating element within a first time period to drive the heating element to work and generate heat during the first time period;
   in response to the target resistance value being greater than the current resistance value, and the difference between the target resistance value and the current resistance value being less than the preset threshold, the controlling unit is configured to conduct the path between the battery assembly and the heating element within a second time period to drive the heating element to work and generate heat during the second time period; and
   the first time period is longer than the second time period.

2. The heating assembly as claimed in claim 1, wherein,

   in response to the target resistance value being not greater than the current resistance value, the controlling unit is configured to conduct the path between the battery assembly and the heating element within a third time period to drive the heating element to work and generate heat during the third time period; and
   the third time period is shorter than the second time period.

3. The heating assembly as claimed in claim 1, wherein a cut-off time period is defined between two adjacent second time periods, between two adjacent first time periods, between two adjacent third time periods, between the second time period and the first time period adjacent to the second time period, between the second time period and the third time period adjacent to the second time period, or between the first time period and the third time period adjacent to the first time period, and the cut-off time period has a fixed time length.

4. The heating assembly as claimed in claim 3, further comprising:

   a switching unit, located on the path between the heating element and the battery assembly; wherein the controlling unit is connected to the switching unit to control conduction of the switching unit, so as to conduct the path between the battery assembly and the heating element within the second time period, the first time period, or the third time period.

5. The heating assembly as claimed in claim 4, wherein,

   the heating element comprises a heating unit and a temperature measuring unit, the heating unit is connected to the battery assembly through the switching unit, the temperature measuring unit is in-parallel connected to the heating unit and is connected to the controlling unit, enabling the controlling unit to detect the current resistance value of the heating element through the temperature measuring unit;
   the heating assembly comprises a sampling unit connected in series with the temperature measuring unit, the sampling unit is connected to the controlling unit, enabling the controlling unit to detect a current flowing through the sampling unit and the temperature measuring unit through the sampling unit, and a resistance value of the temperature measuring unit is determined; the resistance value of the temperature measuring unit represents the current resistance value of the heating element.

6. The heating assembly as claimed in claim 3, wherein the second time period, the first time period, and the third time period are adjustable.

7. The heating assembly as claimed in claim 6, wherein the controlling unit comprises a proportional-integral-differential controller (PID controller) to adjust the second time period, the first time period, or the third time period, according to the fixed time length cut-off time period, the current resistance value, and the target resistance value.

8. The heating assembly as claimed in claim 7, wherein,

   a first ratio of the second time period to a first time sum is adjustable, the first ratio is greater than 0 and less than or equal to 99.9%, and the first time sum is a sum of the second time period and the cut-off time period; and/or
   a second ratio of the first time period to a second time sum is adjustable, the second ratio is greater than 0 and less than or equal to 99.9%, and the second time sum is a sum of the first time period and the cut-off time period; and/or
   a third ratio of the third time period to a third time sum is adjustable, the third ratio is greater than 0 and less than or equal to 99.9%, and the third time sum is a sum of the third time period and the cut-off time period.

9. The heating assembly as claimed in claim 3, wherein the controlling unit is configured to detect the current resistance value of the heating element at the current time point within the cut-off time period.

10. The heating assembly as claimed in claim 1, wherein the target temperature of the heating element at the current time point is determined according to a preset temperature-time curve of the heating element within the heating phase; the target resistance value corresponding to the target temperature is determined according to a preset temperature-resistance relationship table.

11. A method for controlling a heating assembly, comprising:

   detecting a current resistance value of a heating element at a current time point during a heating phase, and determining a target resistance value corresponding to a target temperature at the current time point;
   conducting, in response to the target resistance value being greater than the current resistance value, and a difference between the target resistance value and the current resistance value being not less than a preset threshold, a path between a battery assembly connected to the heating assembly and the heating element within a first time period to drive the heating element to work and generate heat during the first time period;
   conducting, in response to the target resistance value being greater than the current resistance value, and the difference between the target resistance value and the current resistance value being less than the preset threshold, the path between the battery assembly and the heating element within a second time period to drive the heating element to work and generate heat during the second time period;
wherein the first time period is longer than the second time period.

12. The method as claimed in claim 11, further comprising:

   conducting, in response to the target resistance value being not greater than the current resistance value, the path between the battery assembly and the heating element within a third time period to drive the heating element to work and generate heat during the third time period;
   wherein the third time period is shorter than the second time period.

13. An electronic atomization device, comprising:

   the heating assembly according to any one of claims 1 to 10; and
   a battery assembly, configured to supply power to the heating assembly.

FIG. 1

FIG. 2

FIG. 3

```
                    ┌─────────────┐
              ┌────→│  switching  │←──────────────────┐
              │     │   unit is   │                   │
              │     │ disconnected│                   │
              │     └─────────────┘                   │
              │            │                          │
┌──────────┐  │           ▼                           │
│ switching│  │        ╱─────╲                        │
│  unit is │  │  no  ╱         ╲                       │
│conductive│←─┴─────   Rt>Rx                          │
│for 0.01ms│        ╲         ╱                        │
└──────────┘          ╲─────╱                          │
                         │ yes                         │
                         ▼                             │
                      ╱─────╲          ┌──────────┐    │
                    ╱         ╲   yes   │ switching│    │
                     ΔT≤ 10℃  ─────────→│  unit is │────┘
                    ╲         ╱          │conductive│
                      ╲─────╱            │for 100ms │
                         │ no            └──────────┘
                         ▼
                  ┌──────────┐
                  │ switching│
                  │  unit is │
                  │conductive│────────────────────────┘
                  │ for 10ms │
                  └──────────┘
```

FIG. 4

```
  11
   ┌──────────────────┐        ┌──────────────────────────────────────────┐
   │detecting a current│       │conducting, in response to the target resis-│
   │resistance value of a│     │tance value being greater than the current  │
   │heating element at a │     │resistance value, and a difference between  │   12
   │current time point   │  ┌─→│the target resistance value and the current │
   │during a heating     │──┤  │resistance value being not less than a preset│
   │phase, and           │  │  │threshold, a path between a battery assembly │
   │determining a target │  │  │connected to the heating assembly and the    │
   │resistance value     │  │  │heating element within a first time period to│
   │corresponding to a   │  │  │drive the heating element to work and generate│
   │target temperature at│  │  │heat during the first time period           │
   │the current time point│ │  └──────────────────────────────────────────┘
   └──────────────────┘  │
                         │    ┌──────────────────────────────────────────┐
                         │    │conducting, in response to the target resis-│
                         │    │tance value being greater than the current  │   13
                         │    │resistance value, and the difference between │
                         └───→│the target resistance value and the current │
                              │resistance value being less than the preset  │
                              │threshold, the path between the battery assembly│
                              │and the heating element within a second time │
                              │period to drive the heating element to work  │
                              │and generate heat during the second time period│
                              └──────────────────────────────────────────┘
```

FIG. 5

conducting, in response to the target resistance value being greater than the current resistance value, and a difference between the target resistance value and the current resistance value being not less than a preset threshold, a path between a battery assembly connected to the heating assembly and the heating element within a first time period to drive the heating element to work and generate heat during the first time period — 22

detecting a current resistance value of a heating element at a current time point during a heating phase, and determining a target resistance value corresponding to a target temperature at the current time point — 21

conducting, in response to the target resistance value being greater than the current resistance value, and the difference between the target resistance value and the current resistance value being less than the preset threshold, the path between the battery assembly and the heating element within a second time period to drive the heating element to work and generate heat during the second time period — 23

conducting, in response to the target resistance value being not greater than the current resistance value, the path between the battery assembly and the heating element within a third time period to drive the heating element to work and generate heat during the third time period — 24

FIG. 6

heating assembly — 10

battery assembly — 20

FIG. 7

### INTERNATIONAL SEARCH REPORT

| International application No. |
| --- |
| **PCT/CN2022/110076** |

**A. CLASSIFICATION OF SUBJECT MATTER**

A24F 40/00(2020.01)i

According to International Patent Classification (IPC) or to both national classification and IPC

**B. FIELDS SEARCHED**

Minimum documentation searched (classification system followed by classification symbols)

A24F40/-; ;A24F47/-

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI: 麦时科技, 张幸福, 电子烟, 气溶胶, 雾化, 加热非燃烧, 加热不燃烧, 加热, 发热, 受热, 电阻, 阻值, 目标, 设定, 当前, 实时, 差, 大于, 小于, 低于, 高于, 预设, 阈值, 上限, 下限, 时间, 温度, 长, 短, 大, 小, 多, 少, 高, 低, 时间段, 测温, 电流, 时序图, 曲线, 关系表, 第一, 第二, 第三, 控制, 调整, 调节, 改变, 调控, PID, PMW, aerosol, tobacco, cigarette, smok+, heat+, atomiz+, bigger, smaller, larger, longer, more, greater, less, lower, time, period, session, resistance, first, second, third, vacancy, vacant, adjust+, accommodat+, chang+, control+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113907423 A (SHENZHEN MAISHI TECHNOLOGY CO., LTD.) 11 January 2022 (2022-01-11) description, paragraphs [0030]-[0062] | 1-13 |
| X | CN 109156898 A (XIDIAN UNIVERSITY) 08 January 2019 (2019-01-08) description, paragraphs [0019]-[0030], and figure 1 | 1-2, 10-13 |
| Y | CN 109156898 A (XIDIAN UNIVERSITY) 08 January 2019 (2019-01-08) description, paragraphs [0019]-[0030], and figure 1 | 3-9 |
| Y | CN 108873976 A (SHENZHEN LIFU TECHNOLOGY CO., LTD.) 23 November 2018 (2018-11-23) description, paragraphs [0036]-[0076], and figures 1-4 | 3-9 |
| X | CN 104720119 A (DONG JINMING) 24 June 2015 (2015-06-24) description, paragraphs [0026]-[0051], and figures 1-5 | 1-2, 10-13 |
| A | CN 108366439 A (ZHANG YIYUE) 03 August 2018 (2018-08-03) entire document | 1-13 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 September 2022** | **24 October 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 397 195 A1**

<table>
<tr><td colspan="2" align="center">INTERNATIONAL SEARCH REPORT</td><td>International application No.</td></tr>
<tr><td colspan="2"></td><td>**PCT/CN2022/110076**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 109645571 A (SHENZHEN SMOORE TECHNOLOGY LIMITED) 19 April 2019 (2019-04-19)<br>    entire document | 1-13 |
| A | US 2018206557 A1 (NU MARK INNOVATIONS LTD.) 26 July 2018 (2018-07-26)<br>    entire document | 1-13 |
| A | US 2021243842 A1 (SEMICONDUCTOR COMPONENTS INDUSTRIES, LLC.) 05 August 2021 (2021-08-05)<br>    entire document | 1-13 |

Form PCT/ISA/210 (second sheet) (January 2015)

**INTERNATIONAL SEARCH REPORT**
Information on patent family members

International application No.

**PCT/CN2022/110076**

| Patent document cited in search report | | | Publication date (day/month/year) | Patent family member(s) | | | Publication date (day/month/year) |
|---|---|---|---|---|---|---|---|
| CN | 113907423 | A | 11 January 2022 | None | | | |
| CN | 109156898 | A | 08 January 2019 | None | | | |
| CN | 108873976 | A | 23 November 2018 | WO | 2020000152 | A1 | 02 January 2020 |
| | | | | CN | 108873976 | B | 07 July 2020 |
| CN | 104720119 | A | 24 June 2015 | None | | | |
| CN | 108366439 | A | 03 August 2018 | CN | 108366439 | B | 16 November 2021 |
| CN | 109645571 | A | 19 April 2019 | None | | | |
| US | 2018206557 | A1 | 26 July 2018 | US | 10226078 | B2 | 12 March 2019 |
| US | 2021243842 | A1 | 05 August 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111012970X